# EUROPÄISCHE PATENTANMELDUNG

(11) **EP 0 767 205 A1**
(43) Veröffentlichungstag der Anmeldung: **09.04.1997**
(21) Anmeldenummer: 96115270.9
(22) Anmeldetag: 24.09.1996
(51) Int. Cl.: C08K 5/5398, C08L 21/00

(54) **Reversionsfreie Vulkanisation von Natur- und Synthesekautschuk durch Beschleunigung mit Dithiophosphat**

(30) Priorität: 06.10.1995 DE 19537236
(71) Anmelder: Rhein Chemie Rheinau GmbH, 68219 Mannheim (DE)
(72) Erfinder: Schäfer, Volker, Dr., 67122 Altrip (DE); Graf, Hans-Joachim, Dr., 68219 Mannheim (DE); Schulz, Hartmut, Dr., 69121 Heidelberg (DE); Steger, Lothar, Dr., 81545 München (DE)
(74) Vertreter: Jochum, Axel

(57) **Zusammenfassung**

Vulkanisierbare Kautschukmischung enthaltend natürlichen und/oder synthetischen Kautschuk, 0,1 bis 10 Gew.-% Dithiophosphorsäurepolysulfid mit C₄-C₁₂-Alkylgruppen, 0,5 bis 8 Gew.-% Metallalkyldithiophosphat und/oder Mercaptobenzthiazol, sowie gegebenenfalls übliche Zusätze.

## Beschreibung

Bei der Schwefelvulkanisation von CC-Doppelbindungen enthaltenden Kautschuken, insbesondere Naturkautschuk, wird Reversion beobachtet, d.h. ein Rückgang der Vernetzung, der nach Überschreiten des Vulkanisationsoptimums je nach Vulkanisationssystem mehr oder weniger schnell auftritt. Der Rückgang der Vernetzung bewirkt einen Abfall der mechanischen Eigenschaften. Im Vulkameterversuch wird der Einfluß von Wärme auf den Spannungswert der Vulkanisate angezeigt. Daraus kann man auf die Wärmebestandigkeit der Vulkanisate schließen und aus dieser wiederum auf die Reversion.

Untersuchungen zeigen, daß die Reversionsneigung vom gewählten Beschleuniger abhängig ist. Zur Minimierung der Reversion stehen mehrere Möglichkeiten zur Verfügung:
1. Zufügen einer Säure zur Kautschukmischung
   Die Säure reagiert mit unter den Vulkanisationsbedingungen aus den Beschleunigern freigesetzten Aminen zum Salz, so daß das möglicherweise für die Reversion mitverantwortliche Amin eliminiert wird, soweit Salzbildung erfolgt.
2. Gezielte Auswahl und Zusammenstellung von Vulkanisationsbeschleunigern, die eine sehr geringere Reversion ergeben
   Beispiele für solche Beschleuniger sind Mercaptobenzthiazol und Zinkdithiophosphat. Weil die damit erzielte Vulkanisationsgeschwindigkeit nicht ausreicht, können beide aber nicht alleine eingesetzt werden, sondern nur in Kombination mit einem weiteren Beschleuniger, z.B. Sulfenamid. Durch die Kombination von zwei Beschleunigern wird die Reversion zwar vermindert, aber nicht beseitigt.
3. Einsatz von "Reparatur-Substanzen"
   Solche Substanzen sollen das durch die Reversionsreaktion partiell zerstörte Netzwerk reparieren. Über den Mechanimus ist praktisch nichts bekannt. Die beobachteten Effekte sind gering.
4. Ersatz eines Teils des Schwefels durch einen Schwefelspender
   Hierdurch sollen vermehrt oligo-sulfidische Netzbrücken, denen eine erhöhte Stabilität zugeschrieben wird, an Stelle der poly-sulfidischen entstehen, aber die dynamische Beständigkeit der so erhaltenen Vulkanisate ist beeinträchtigt. Zudem liefern die auf dem Markt befindlichen Schwefelspender bei der Vulkanisation aminische Spaltprodukte, die Reversion verursachen können und damit den Effekt zunichte machen.

Der Erfindung liegt die Erkenntis zugrunde, daß ein Vulkanisationssystem aus einem Dithiophosphorsäurepolysulfid mit C₄-C₁₂-Alkylgruppen und einem Metallalkyldithiophosphat und/oder einem Mercaptobenzthiazol natürlichen und synthetischen Kautschuk reversionsfrei vulkanisiert.

Gegenstand der Erfindung ist somit eine vulkatusierbare Kautschukmischung enthaltend natürlichen und/oder synthetischen Kautschuk und, jeweils bezogen auf die Kautschukmenge, 0,1 bis 10 Gew.-% Dithiophosphorsäurepolysulfid mit C₄-C₁₂-Alkylgruppen, 0,5 bis 8 Gew.-% Metallalkyldithiophosphat und/oder Mercaptobenzothiazol sowie gegebenenfalls übliche Zusätze.

Erfindungsgemäße Kautschuke sind z. B: Naturkautschuk und Synthesekautschuke wie Polybutadien, Butadien- Styrol-Copolymerisate und Nitrilkautschuk z.B. Butadien/Acrylnitrit Copolymersiate.

Geeignete Dithiophosphorsäurepolysulfide mit C₄-C₁₂-Alkylgruppen entsprechen beispielsweise der Formel 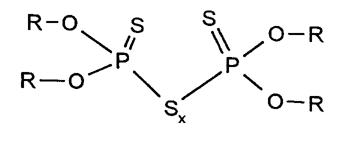
R = C₄-C₁₂ Alkyl
x = 1 bis 10

Geeignete Vertreter sind z.B. 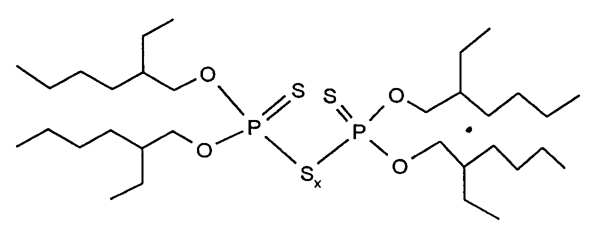
x = 1 bis 10

Metallalkyldithiophosphate im Sinne der Erfindung sind Verbindungen der Formel 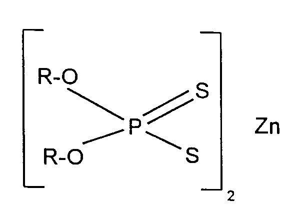
R = C₄-C₁₂ Alkyl

Ein geeigneter Vertreter ist z.B.

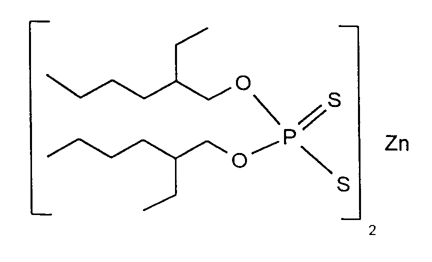

Bevorzugt verwendet man Dithiophosphorsäurepolysulfide in Mengen von 1,0 bis 9, besonders bevorzugt 1,5 bis 4 Gew.-%, bezogen auf Kautschuk. Die Metallalkyldithiophosphate bzw. Mercaptobenzthiazole werden bevorzugt in Mengen von 1 bis 7, besonders bevorzugt 2 bis 5 Gew.-%, bezogen auf Kautschuk, eingesetzt. Das Mengenverhaltnis Dithiophosphorsäurepolysulfid zu Metallalkyldithiophosphat bzw. Mercaptobenzthiazol ist bevorzugt 0,25 bis 0,5.

Die erfindungsgemäßen Kautschuktmischungen können in üblicher Weise bei Temperaturen bis 200°C für eine Zeit von 1 bis 20 min vulkanisiert werden.

### Beispiel 1

Es werden Kautschukmischungen hergestellt und unter Luftausschluß bei 150°C und bei 180°C für die gleiche Zeit vulkanisiert. Die Mischungen und das Ergebnis sind in Tabelle 1 dargestellt. Die Zahlenangaben für die Stoffe sind Gewichtsteile.

Es werden Schwefelspender, die unter den üblichen Vulkanisationsbedingungen Amine abspalten können, verglichen mit den erfindungsgemäßen Schwefelspendern. Es wird ein Vulkanisationssystem gewählt, welches keinen freien Schwefel enthält, um die bei Vulkanisation mit Schwefel auftretenden Einflüsse der Schwefelbrückenstruktur, die in der Literatur beschrieben sind und in der Praxis beobachtet werden, auszuschließen.

Der Modul 300 ist als Indikator für die Reversion geeignet. Schwefelspender, die Amine abspalten können (A2, B1, C3) zeigen bei Überheizen um 30°C einen Abfall des Modul 300 um 40 bis 50 %, während der erfindungsgemäße Schwefelspender keine Veränderung des Modul 300 erkennen läßt (D5). Bei Austausch des Zinkalkyldithiophosphates gegen das Isooctylaminsalz der Dithiophosphorsäure beträgt der Abfall des Modul 300 nur 30 % (F6). Das bedeutet, daß Aminsalze eine geringere Reversion verursachen als die Amine, die, wie bekannt, aus den in A2, B1 und C3 verwendeten Schwefelspendern abgespalten werden. Ein Abfangen dieser Amine mit Säuren, beispielsweise Stearinsäure, verhindert daher die Reversion nicht ausreichend.

Die Bestimmung des Druckverformungsrests (DVR) ist die Kombination einer mechanischen Prüfung mit einer Hitzealterung, wobei eine Kraft bei erhöhter Temperatur auf die Probe einwirkt. Die Messung des DVR bei unterschiedlichen Temperaturen zeigt im Falle der Vernetzung mit Dithiodimorpholin (DTDM) beim Vergleich der bei 180°C vulkanisierten Proben mit den bei 150°C vulkanisierten Proben einen Anstieg von ca. 60 bis 30 %, je nach Prüftemperatur und -dauer (A2), im Falle der Vemetzung mit Dithiocaprolactan (DTDC) einen Anstieg um 20 bis 10 % (B1, C3), wogegen der erfindungsgemäße Schwefelspender eine Verbesserung der DVR-Werte um 15 bis 3 % ergibt, die sich bei Austausch des Zinkdithiophosphates durch das Aminsalz der Dithiophosphorsäure auf 10 bis 0 % verringert (F6).

Der Vergleich der Versuche D5 und F6 zeigt, daß sich bei Ersatz des Zinkdithiophosphats durch ein Dithiophosphorsäure-Aminsalz der Modul 300 bei höherer Vulkanisationstemperatur deutlich verringert. Dies läßt darauf schließen, daß der negative Einfluß von Aminen auch durch Salzbildung nicht vollständig unwirksam gemacht werden kann.

**Tabelle 1**

| Versuch | a2 | | b1 | | c3 | | d5 | | f6 | |
|---|---|---|---|---|---|---|---|---|---|---|
| Naturkautschuk | 100 | | 100 | | 100 | | 100 | | 100 | |
| Ruß | 35 | | 35 | | 35 | | 35 | | 35 | |
| Zinkoxid | 5 | | 5 | | 5 | | 5 | | 5 | |
| Stearinsäure | 1 | | 1 | | 1 | | 1 | | 1 | |
| Dithiodimorpholin | 2 | | - | | - | | - | | - | |
| Dithiocaprolactam | - | | 3 | | 3 | | - | | - | |
| Bis(O,O-2-ethylhexylthiophosphoryl)-polysulfid | - | | - | | - | | 5,8 | | 5,8 | |
| Zinkdi-i-octyl-dithiophosphat | 1 | | 1 | | - | | 1 | | - | |
| Di-i-octyldithiophosphorsäure Aminsalz | - | | - | | 1 | | - | | 1 | |
| Vulkanisationszeit [min] | 23 | | 18 | | 18 | | 12 | | 12 | |
| Vulkanisationstemperatur [°C] | 150 | 180 | 150 | 180 | 150 | 180 | 150 | 180 | 150 | 180 |
| Härte [°Shore A] | 40 | 36 | 45 | 38 | 42 | 39 | 45 | 45 | 45 | 45 |
| Elastizität [%] | 56 | 56 | 57 | 57 | 56 | 55 | 55 | 58 | 55 | 59 |
| Modul 100 [MPa] | 1,0 | 0,7 | 1,3 | 0,8 | 1,3 | 0,8 | 1,4 | 1,3 | 1,4 | 1,2 |
| Modulus 300 [MPa] | 5,1 | 3 | 6,3 | 3,2 | 6,7 | 3,2 | 7 | 7 | 7,2 | 5,8 |
| Reißfestigkeit [MPa] | 16 | 8 | 19 | 10 | 20 | 10 | 22 | 18 | 22 | 18 |
| Reißdehnung [%] | 550 | 545 | 550 | 555 | 550 | 560 | 565 | 515 | 560 | 560 |

| Druckverformungsrest [%] | | | | | | | | | | |
|---|---|---|---|---|---|---|---|---|---|---|
| 24 h / 70°C | 30 | 49 | 36 | 43 | 32 | 47 | 29 | 25 | 29 | 27 |
| 24 h / 90°C | 53 | 62 | 55 | 52 | 49 | 54 | 42 | 37 | 43 | 39 |
| 72 h / 90°C | 57 | 73 | 60 | 65 | 56 | 65 | 54 | 51 | 53 | 53 |

### Beispiel 2

Es wird ein Vulkanisationssystem ausgesucht, das als zusätzliche Komponente zum Schwefelspender freien Schwefel enthält. Als Vergleichssystem ist ein branchenübliches Standardvulkanisationssystem gewählt, das die Herstellung von Vulkanisaten mit guten bis sehr guten physikalischen und Alterungseigenschaften ermöglicht (5E). Die Ergebnisse sind in Tab. 2 zusammengefaßt.

Die Vulkanisation bei 150°C bzw. 180°C bei jeweils gleichen Vulkanisationszeiten ergibt für die Vergleichsmischung 5E einen deutlich stärkeren Abfall des Modul 100 als bei den Versuchen 6B, 6C und 6E.

Der DVR-Wert der Vergleichsmischung verschlechtert sich beim überheizten Vulkanisat um 17 %, während bei den Versuchen 6E, 6C und 6B eine Verbesserung von 8-10 % beobachtet wird.

Es muß angenommen werden, daß das Netzwerk beim Überheizen stabiler wird, wodurch es unter den Bedingungen des Druckverformungsversuchs eine geringere Umorientierung zeigt, während es beim Versuch 5E durch Überheizen destabilisiert wird.

Dies zeigt sich auch bei der Heißluftalterung. Während bei Versuch 5E die Härte nahezu unverändert ist, mit einer Tendenz zur Erweichung, steigt bei den Versuchen 6E, 6C und 6B die Härte im Mittel um ca. 8°ShA an. Dieser Tendenz kann durch Dotierung mit geeigneten Aminen entgegen gewirkt werden.

**Tabelle 2**

| Versuch | 5E | | 6E | | 6C | | 6B | |
|---|---|---|---|---|---|---|---|---|
| Naturkautschuk | 100 | | 100 | | 100 | | 100 | |
| Ruß | 50 | | 50 | | 50 | | 50 | |
| Napthen.Öl | 5 | | 5 | | 5 | | 5 | |
| Zinkoxid | 5 | | 5 | | 5 | | 5 | |
| Stearinsäure (Gew.-Tle.) | 1 | | 1 | | 1 | | 1 | |
| S-80 (Schwefel 80%) | 0,5 | | 0,5 | | 0,5 | | 0,5 | |
| TBBS-80 | 0,8 | | - | | - | | - | |
| OTOS | 1,2 | | - | | - | | - | |
| SDT-70 | - | | 9 | | 9 | | 9 | |
| ZDODP-70 | - | | 1 | | 0,5 | | - | |
| MBTS-80 | - | | - | | 0,5 | | 1 | |
| Vulkanisationszeit [min] | 13 | | 16 | | 18 | | 12 | |
| Vulkanisationstemperatur [°C] | 150 | 180 | 150 | 180 | 150 | 180 | 150 | 180 |
| Harte [°Shore A] | 61 | 56 | 56 | 54 | 60 | 58 | 62 | 61 |
| Elastizität [%] | 63 | 61 | 63 | 59 | 67 | 64 | 67 | 65 |
| Modul 100 [MPa] | 3,8 | 2,6 | 3,3 | 2,2 | 3,6 | 3,6 | 4,3 | 3,6 |
| Modul 500 Nm [MPa] | 15,8 | 8,1 | 17 | 7,8 | 17,8 | 16,8 | 17,9 | 14,4 |
| Reißfestigkeit [MPa] | 20 | 19 | 19 | 18 | 18 | 19 | 19 | 18 |
| Reißdehnung [%] | 315 | 355 | 350 | 400 | 305 | 320 | 295 | 305 |

| Druckverformungsrest [%] | | | | | | | | |
|---|---|---|---|---|---|---|---|---|
| 24 h/90°C | 17 | 36 | 26 | 16 | 20 | 12 | 19 | 11 |
| 24 h/100°C | 27 | 32 | 32 | 29 | 29 | 22 | 30 | 21 |
| 24 h/125°C | 42 | 59 | 42 | 32 | 38 | 30 | 37 | 29 |
| TBBS = N-tert-Butyl-2-benzothiazylsulfenamid OTOS = N-Oxidiethylendithiocarbamyl-N-oxidiethylensulfenamid SDT = Bis(0,0-2-ethylhexylthiophosphoryl)polysulfid ZDODP = Zinkdiisooctyldithiophosphat MBTS = Dibenzothiazyldisulfid | | | | | | | | |

## Patentansprüche

1. Vulkanisierbare Kautschukmischung enthaltend natürlichen und/oder synthetischen Kautschuk und, jeweils bezogen auf die Kautschukmenge, 0,1 bis 10 Gew.-% Dithiophosphorsäurepolysulfid mit C₄-C₁₂AIkylgruppen, 0,5 bis 8 Gew.-% Metallalkyldithiophosphat und/oder Mercaptobenzthiazol, sowie gegebenenfalls übliche Zusätze.
